# EUROPÄISCHE PATENTANMELDUNG

(11) **EP 1 046 450 A1**
(43) Veröffentlichungstag der Anmeldung: **25.10.2000**
(21) Anmeldenummer: 99107821.3
(22) Anmeldetag: 17.04.1999
(51) Int. Cl.: B23D 21/04, B23B 5/08, B23D 21/08

(54) **Rohrendenverarbeitungsgerät**

(71) Anmelder: Georg Fischer Rohrverbindungstechnik GmbH, 78224 Singen (DE)
(72) Erfinder: Kramer, Herbert, 78224 Singen (DE)
(74) Vertreter: Weiss, Wolfgang, Dr.

(57) **Zusammenfassung**

Ein Rohrendenbearbeitungsgerät (1) ist mit einem aus zwei Teilen (2a, 2b) bestehenden Gehäuse (2) versehen. Im oberen Gehäuseteil (2a) sind sie Spanneinrichtung (13) und der Werkzeugträger (9) abgestützt. Der untere Gehäuseteil (2b) ist modular ausgebildet und nimmt zumindest die zur Ansteuerung des Motors relevanten Bauteile (18) auf. Mit einem derartig gestalteten Rohrendenbearbeitungsgerät (1) ist das Umrüsten von einem elektrischen auf einen pneumatischen Antrieb oder umgekehrt auf einfache Art und Weise innerhalb kürzester Zeit möglich. Ausserdem lassen sich die wesentlichen Teile standardisieren, was in fertigungstechnischer Hinsicht grosse Vorteile mit sich bringt.

## Beschreibung

Die Erfindung betrifft ein Rohrendenbearbeitungsgerät nach dem Oberbegriff des Anspruchs 1.

Mobile, vorzugsweise tragbare Rohrendenbearbeitungsgeräte der hier zur Rede stehenden Art werden für die spanabhebende Bearbeitung von Rohrenden als Vorbereitungsschritt für das Schweissen oder andere Bearbeitungsoperationen eingesetzt. Dabei werden je nach herrschenden Rahmenbedingungen elektrisch oder pneumatisch angetriebene Geräte eingesetzt.

Daher wäre es wünschenswert, wenn nicht für beide Einsatzfälle je ein Rohrendenbearbeitungsgerät vorhanden sein müsste, sondern wenn das jeweilige Gerät einfach und schnell den entsprechenden Rahmenbedingungen angepasst werden könnte.

Es ist daher die Aufgabe der Erfindung, ein Rohrendenbearbeitungsgerät der im Oberbegriff des Anspruchs 1 genannten Art derart zu verbessern, dass der grundsätzliche Aufbau des Geräts bei beiden Antriebsvarianten gleich ist und dass das Gerät mit geringem Aufwand vom einen auf den anderen Antrieb umgerüstet werden kann.

Diese Aufgabe wird durch die im Kennzeichen des Anspruchs 1 angeführten Merkmale gelöst.

Durch ein Rohrendenbearbeitungsgerät mit einem zweiteilig ausgebildeten Gehäuse, dessen erster Gehäuseteil zum Abstützen der Spanneinrichtung und des Werkzeugträgers ausgebildet ist und dessen zweiter Gehäuseteil modular ausgebildet ist und zumindest die zur Ansteuerung des Motors relevanten Bauteile aufnimmt, bietet das Gerät einerseits in fertigungstechnischer Hinsicht Vorteile, da der erste Gehäuseteil mitsamt dem Grossteil der Komponenten für beide Antriebsvarianten einheitlich gestaltet werden kann. Zum anderen wird ein Umrüsten von einem elektrischen auf einen pneumatischen Antrieb und umgekehrt auf einfache Art und Weise innerhalb kürzester Zeit ermöglicht.

Bevorzugte Ausführungsbeipiele der Erfindung sind in den abhängigen Ansprüchen 2 bis 9 umschrieben.

Nachfolgend wird ein bevorzugtes Ausführungsbeispiel der Erfindung anhand von zwei Zeichnungen näher erläutert. Dabei zeigt:
Fig. 1 einen Querschnitt durch ein elektrisch betriebenes Rohrendenbearbeitungsgerät, und
Fig. 2 einen Querschnitt durch ein pneumatisch betriebenes Rohrendenbearbeitungsgerät.

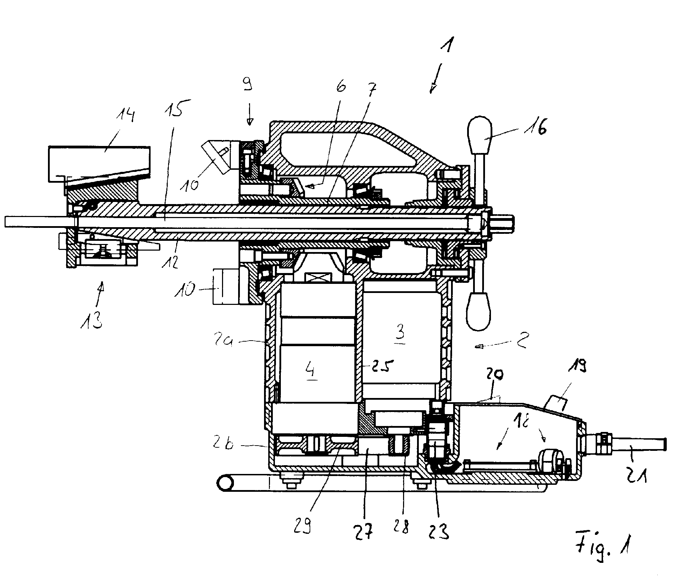

Anhand der Fig. 1, welche eine elektrisch angetriebene Variante eines Rohrendenbearbeitungsgeräts 1 zeigt, soll dessen prinzipieller Aufbau näher erläutert werden. Das Rohrendenbearbeitungsgerät 1 weist ein Gehäuse 2 auf, in dem ein Motor 3 und ein Getriebe 4 angeordnet sind. Das Getriebe 4 treibt über eine Kegelradverzahnung 6 und eine Antriebswelle 7 den Werkzeugträger 9 an, an dem mehrere Werkzeuge 10 befestigt sind. Eine im oberen Teil des Gehäuses 2 abgestützte Hohlwelle 12 ist am Ende mit einem Spannkopf 13 versehen, mittels welchem das Rohrendenbearbeitungsgerät 1 drehfest an dem zu bearbeitenden Rohr (nicht eingezeichnet) fixierbar ist. Zum radialen Verschieben von am Spannkopf 13 angeordneten Spannbacken 14 ist eine durch die Hohlwelle 12 geführte Spindel 15 vorgesehen, die über einen Handhebel 16 betätigbar ist.

Das Gehäuse 2 selber ist zweiteilig ausgebildet, wobei der erste Gehäuseteil 2a zur Aufnahme des Motors 3 und der Getriebanordnung 4 ausgebildet ist. Der zweite Teil 2b des Gehäuses ist modular ausgebildet und nimmt die zur Ansteuerung des Motors 3 relevanten Bauteile auf. In diesem modularen Gehäuseteil 2b, der gleichzeitig als Standfläche des Rohrendenbearbeitungsgeräts 1 dient, sind im Falle eines Elektroantriebs die elektrischen und elektronischen Bauteile 18 aufgenommen. Ausserdem sind ein Drehknopf 19 zur manuellen Drehzahlregelung des Motors 3 sowie ein Netzschalter 20 vorgesehen. Um den modularen Aufbau zu komplettieren, ist die elektrische Anschlussleitung 21 in den unteren Gehäuseteil 2b hineingeführt. Als elektrische Schnittstelle zwischen dem ersten und zweiten Gehäuseteil 2a, 2b ist eine lösbare Steckverbindung 23 vorgesehen.

Der obere Gehäuseteil 2a ist durch eine Trennwand 25 in zwei Kammern unterteilt, wobei in der rechten Kammer der Elektromotor 3 und in der linken Kammer das Getriebe 4 aufgenommen ist. Der Elektromotor 3 ist mittels eines Riemens 27 mit dem Getriebe 4 gekoppelt, wobei der Durchmesser der Riemenscheibe 28 des Elektromotors 3 einen Bruchteil des Durchmessers der Riemenscheibe 29 des Getriebes 4 beträgt, so dass der Riemenantrieb gleichzeitig als Untersetzung wirkt.

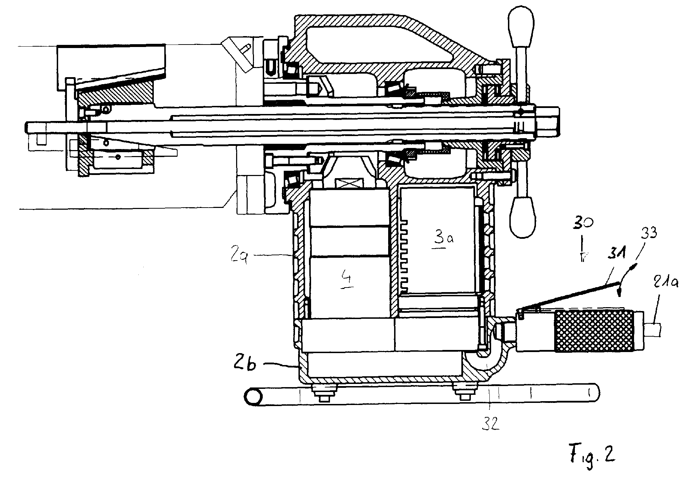

Im Falle des in Fig. 2 dargestellten, pneumatischen Antriebs ist am Gehäuseunterteil 2b ein pneumatisches Drosselventil 30 angeordnet, das über einen Hebel 31 betätigbar ist. Dabei kann der Motor 3a über den Hebel 31 sowohl ein- und ausgeschaltet wie auch in seiner Drehzahl reguliert werden. Durch Drücken des Hebels 31 wird das Drosselventil 30 geöffnet währenddem es mit dessen Loslassen wieder geschlossen wird. Die Drehzahlregulierung erfolgt durch Drehen des Hebels 31 in der durch Pfeile 33 angedeuteten Richtung. Bei einer solchen Ausführungsform kann der Motor 3a mit einer Hand ein- und ausgeschaltet wie auch in seiner Drehzahl reguliert werden. Ein Loslassen des Hebels 31 bewirkt dabei das sofortige Abschalten des Motors 3a und zwar unabhängig davon, in welcher Drehstellung sich der Hebel 31 gerade befindet. Dies hat den Vorteil, dass die Drehbewegung des Werkzeughalters 9, beispielsweise bei drohender Gefahr, innert kürzester Zeit gestoppt werden kann.

Vom Drosselventil 30 führt ein Luftkanal 32 durch den Gehäuseunterteil 2b, wobei eine pneumatische Schnittstelle (nicht eingezeichnet) zwischen dem ersten und zweiten Gehäuseteil 2a, 2b vorgesehen ist, über welche der pneumatisch angetriebene Motor 3a mit der notwendigen Druckluft versorgt wird. Die notwendige Druckluftleitung (nicht eingezeichnet) wird auf der Rückseite des Drosselventils 30 an einer Steckverbindung 21a angeschlossen. Die parallele Anordnung des Motors 3a und des Getriebes 4 ist mit der Elektrovariante identisch.

Um das Rohrendenbearbeitungsgerät 1 von pneumatischem auf elektrischen Antrieb oder umgekehrt umzurüsten, brauchen lediglich der untere Gehäuseteil 2b sowie der Motor 3, 3a und ggf. der Riemen 27 mitsamt der Riemenscheibe 29 des Getriebes 4 ausgetauscht zu werden. Ein Tausch der Riemenscheibe 29 des Getriebes 4 mitsamt dem Riemen 27 wird dann notwendig, wenn der Elektromotor 3 mit wesentlich höheren Drehzahlen als der Druckluftmotor 3a betrieben wird.

Eine andere Ausführungs-Variante kann darin bestehen, dass der Motor 3, 3a und ggf. auch das Getriebe 4 am unteren Gehäuseteil 2b angeordnet wird/werden. In beiden Fällen wird eine mechanische Schnittstelle vorgesehen, mittels welcher der Motor 3, 3a mit dem Getriebe 4 bzw. das Getriebe 4 mit im ersten Gehäuseteil 2a angeordneten, mit dem Werkzeugträger 9 wirkverbundenen Kraftübertragungselementen (nicht eingezeichnet) gekoppelt wird, wenn der erste Gehäuseteil 2a am zweiten Gehäuseteil 2b befestigt wird.

Durch Austausch der mechanischen Schnittstellenelemente -Riemenscheiben 28, 29 oder Zahnräder- kann das Übersetzungsverhältnis zwischen dem Motor 3, 3a und dem Getriebe 4 variiert werden. Dies macht insbesondere dann Sinn, wenn nur der Motor 3, 3a nicht jedoch das Getriebe 4 ausgetauscht wird, da der Elektromotor 3, wie bereits erwähnt, im allgemeinen mit höheren Drehzahlen als der Druckluftmotor 3a betrieben wird.

Als mechanische Schnittstellenelemente können nebst den erwähnten Riemenscheiben 28, 29 oder Zahnrädern auch noch andere Elemente wie beispielsweise Führungselemente, Befestigungslemente, oder Schnappelemente vorgesehen werden, welche das Befestigen des zweiten Gehäuseteils 2b am ersten Gehäuseteil 2a oder den Austausch des Motors 3, 3a erleichtern bzw. ermöglichen.

Durch den modularen Aufbau des Gehäuseunterteils 2b lassen sich die wesentlichen Teile des Rohrendenbearbeitungsgeräts 1 standardisieren, was in fertigungstechnischer Hinsicht grosse Vorteile bietet. Ausserdem wird das Umrüsten von einem elektrischen auf einen pneumatischen Antrieb und umgekehrt auf einfache Art und Weise innerhalb kürzester Zeit ermöglicht. Aufgrund des modularen Aufbaus wird zudem die Servicefreundlichkeit erhöht. Im weiteren bringt die parallele Anordung von Motor und Getriebe den Vorteil mit sich, dass durch einen Austausch der Riemenscheiben oder der Zanhräder die Übersetzung variiert werden kann.

### Bezugszeichenliste für Patentanmeldung: 2968 RVT

**1** Rohrendenbearbeitungsgerät
**2** Gehäuse
**3** Motor
**4** Getriebe
**5**
6 Kegelradverzahnung
**7** Antriebswelle
**8**
**9** Werkzeugträger
**10** Werkzeuge
**11**
**12** Hohlwelle
**13** Spannkopf
**14** Spannbacken
**15** Spindel
**16** Handhebel
**17**
**18** elektronische Bauteile 18
**19** Drehknopf
**20** Netzschalter
**21** Anschlussleitung
**21a** pneumatische Steckverbindung
**23** Steckverbindung
**24**
**25** Trennwand
**26**
**27** Riemen
**28** Riemenscheibe
**29** Riemenscheibe
**30** Drosselventil
**31** Hebelmechanismus
**32** Luftkanal
**33** Pfeil
**34**
**35**
**36**
**37**
**38**
**39**
**40**
**41**
**42**
**43**
**44**
**45**
**46**
**47**
**48**
**49**
**50**
**51**
**52**
**53**
**54**
**55**
**56**
**57**
**58**

## Patentansprüche

1. Rohrendenbearbeitungsgerät (1) mit einem einen Motor (3, 3a) und eine Getriebeanordnung (4, 6) umschliessenden Gehäuse (2), einer Spanneinrichtung (13) zum Festspannen eines Rohres und einem Werkzeugträger (9) mit zumindest einem Rohrenden-Bearbeitungswerkzeug (10), **dadurch gekennzeichnet**, dass das Gehäuse (2) zweiteilig ausgebildet ist, wobei der erste Gehäuseteil (2a) zum Abstützen der Spanneinrichtung (13) und des Werkzeugträgers (9) ausgebildet ist und wobei der zweite Gehäuseteil (2b) modular ausgebildet ist und zumindest die zur Ansteuerung des Motors (3, 3a) relevanten Bauteile (18; 30) aufnimmt.

2. Rohrendenbearbeitungsgerät (1) nach Anspruch 1, dadurch gekennzeichnet, dass der Motor (3, 3a) elektrisch oder pneumatisch angetrieben ist und dass der Motor (3, 3a) und das Getriebe (4) nebeneinander angeordnet sind.

3. Rohrendenbearbeitungsgerät (1) nach Anspruch 1 oder 2, dadurch gekennzeichnet, dass der zweite Gehäuseteil (2b) als Gehäuseunterteil ausgebildet ist und dass am zweiten Gehäuseteil (2b) mechanische, elektrische oder pneumatische Schnittstellenelemente angeordnet sind, welche mit korrespondierenden, am ersten Gehäuseteil (2a) angeordneten Schnittstellenelementen zusammenzuwirken bestimmt sind.

4. Rohrendenbearbeitungsgerät (1) nach einem der vorhergehenden Ansprüche, dadurch gekennzeichnet, dass am zweiten Gehäuseteil (2b) Anschlussmittel (21, 21a) zum Zuführen der für den Betrieb des Motors (3, 3a) notwendigen Energie angeordnet sind.

5. Rohrendenbearbeitungsgerät (1) nach einem der vorhergehenden Ansprüche, dadurch gekennzeichnet, dass der Motor (3a) pneumatisch angetrieben ist und dass am zweiten Gehäuseteil (2b) manuell zu betätigende Mittel (31) angeordnet sind, mittels welchen der Motor (3a) sowohl ein- und ausschaltbar wie auch in der Drehzahl regulierbar ist.

6. Rohrendenbearbeitungsgerät (1) nach einem der vorhergehenden Ansprüche, dadurch gekennzeichnet, dass zwischen dem Motor (3, 3a) und dem Getriebe (4) mechanische Schnittstellenelemente in Form von Zahnrädern oder Riemenscheiben (28, 29) vorgesehen sind.

7. Rohrendenbearbeitungsgerät (1) nach Anspruch 6, dadurch gekennzeichnet, dass die mechanischen Schnittstellenelemente (28, 29) austauschbar sind und damit das Übersetzungsverhältnis variierbar ist.

8. Rohrendenbearbeitungsgerät (1) nach Anspruch 6 oder 7, dadurch gekennzeichnet, dass der Motor (3, 3a) und ggf. das Getriebe (4) am zweiten Gehäuseteil (2b) angeordnet ist/sind, und dass die mechanischen Schnittstellenelemente (28, 29) zwischen dem Motor (3, 3a) und dem Getriebe (4) bzw. zwischen dem Getriebe (4) und im ersten Gehäuseteil (2a) angeordneten, mit dem Werkzeugträger (9) in Wirkverbindung stehenden Kraftübertragungselementen, angeordnet sind.

9. Rohrendenbearbeitungsgerät (1) nach einem der Ansprüche 1 bis 7, dadurch gekennzeichnet, dass der Motor (3, 3a) und das Getriebe (4) im ersten Gehäuseteil (2a) aufgenommen sind, und dass am zweiten Gehäuseteil (2a) elektrische oder pneumatische Schnittstellenelemente angeordnet sind, welche mit korrespondierenden, am ersten Gehäuseteil (2a) angeordneten Schnittstellenelementen zusammenzuarbeiten bestimmt sind.
